# NEUE EUROPÄISCHE PATENTSCHRIFT

(11) **EP 1 355 839 B2**
(45) Veröffentlichungstag und Bekanntmachung des Hinweises auf die Entscheidung über den Einspruch: **05.09.2007**
(45) Hinweis auf die Patenterteilung: 18.08.2004
(21) Anmeldenummer: 02740027.4
(22) Anmeldetag: 14.01.2002
(51) Int. Cl.: B65G 15/32

(54) **FÖRDERBAND MIT EINER EIN ANTIMIKROBIELLES ADDITIV ENTHALTENDEN POLYMEREN OBERFLÄCHENBESCHICHTUNG**
CONVEYOR BELT WITH A POLYMER SURFACE COATING CONTAINING AN ANTIMICROBIAL ADDITIVE
BANDE TRANSPORTEUSE AVEC REVETEMENT DE SURFACE POLYMERE CONTENANT UN ADDITIF ANTIMICROBIEN

(30) Priorität: 02.02.2001 CH 183012001
(43) Veröffentlichungstag der Anmeldung: 29.10.2003
(73) Patentinhaber: Habasit AG, 4153 Reinach (CH)
(72) Erfinder: CEDIEL, Luis, E., CH-8832 Wollerau (CH); HONOLD, Claudia, CH-4053 Basel (CH); BRODMANN, Kurt, CH-4107 Ettingen (CH)
(74) Vertreter: Bollhalder, Renato
(86) Internationale Anmeldenummer: PCT/CH2002/000020
(87) Internationale Veröffentlichungsnummer: WO 2002/062682

(56) Entgegenhaltungen:
- EP-A- 0 818 405
- WO-A-00/13992
- WO-A-97/18148
- DE-A- 19 654 347
- JP-A- 9 058 834
- US-A- 5 697 491
- PATENT ABSTRACTS OF JAPAN vol. 017, no. 177 (M-1393), 6. April 1993 (1993-04-06) & JP 04 333407 A (YOKOHAMA RUBBER CO LTD:THE), 20. November 1992 (1992-11-20)
- PATENT ABSTRACTS OF JAPAN vol. 016, no. 245 (M-1260), 4. Juni 1992 (1992-06-04) & JP 04 055207 A (SHIN KOBE ELECTRIC MACH CO LTD), 21. Februar 1992 (1992-02-21)
- PATENT ABSTRACTS OF JAPAN vol. 1996, no. 04, 30. April 1996 (1996-04-30) & JP 07 331017 A (MITSUBISHI RAYON CO LTD), 19. Dezember 1995 (1995-12-19)
- PATENT ABSTRACTS OF JAPAN vol. 018, no. 122 (C-1173), 28. Februar 1994 (1994-02-28) & JP 05 310963 A (MITSUBISHI RAYON CO LTD), 22. November 1993 (1993-11-22)

## Beschreibung

Die vorliegende Erfindung bezieht sich auf ein Förderband mit einer Zugschicht und einer polymeren Oberflächenbeschichtung, die ein antimikrobielles Additiv enthält, sowie auf ein Verfahren zur Herstellung oder Ausbesserung eines solchen Förderbands.

Beispielsweise bei Förderbändern, die zum Transport von Lebensmitteln eingesetzt werden, besteht die Gefahr, dass auf ihrer Oberfläche Lebensmittelbestandteile haften bleiben und Mikroorganismen, wie z.B. Mikroben, Bakterien, Pilze, Hefen, Viren etc., sich ansiedeln und eventuell wachsen können. Diese Mikroorganismen beeinträchtigen die Qualität und Haltbarkeit der transportierten Lebensmittel. Deshalb müssen sie durch häufiges Reinigen der Förderbänder entfernt werden und/oder ihre mögliche Ansiedlung und das anschliessende Wachstum auf den Förderbändern muss von Anfang an verhindert werden.

Es sind daher unter anderem Förderbänder entwickelt worden, die ganz oder in einzelnen Schichten mit antimikrobiellen Additiven versehen worden sind (Siehe z.B. das Dokument JP-A-04333407. Unter antimikrobiellen Additiven werden hier alle Aktivsubstanzen verstanden, die Mikroorganismen, wie z.B. Mikroben, Bakterien, Pilze, Hefen, Viren etc., abtöten oder ihr Wachstum hemmen.

In der EP-B-0 818 405 sind Kunststoffförderbänder offenbart, die eine Zugschicht oder zwei mit einer Kunststoffzwischenschicht verbundene Zugschichten umfassen, auf die als Förderfläche eine Kunststoffschicht laminiert ist.

Diese Kunststoffschicht enthält eine Zusammensetzung mit Bis-(2-pyridylthio-1-oxido)-zink als antimikrobielles Additiv.

Aus der JP-A-4333406 sind ähnlich aufgebaute Lebensmittel-Förderbänder bekannt, bei denen die polymere Oberflächenbeschichtung imidazolartige Additive gegen Schimmel enthält.

Diese Förderbänder des Standes der Technik weisen den Nachteil auf, dass zu einer wirksamen Verhinderung des Ansiedelns und Wachsens von Mikroorganismen auf der Förderfläche der Oberflächenbeschichtung relativ grosse Mengen an antimikrobiellem Additiv zugefügt werden müssen, um eine ausreichend grosse Konzentration zu erreichen, was einerseits kostspielig ist und anderseits auch die weiteren Eigenschaften des Förderbands negativ beeinträchtigen kann.

Angesichts der Nachteile der bisher bekannten, oben beschriebenen Förderbänder mit antimikrobiellen Additiven liegt der Erfindung die folgende Aufgabe zugrunde: Zu schaffen ist ein Förderband der eingangs erwähnten Art, das ein Ansiedeln und Wachsen von Mikroorganismen auf der Förderfläche bei gleicher Wirksamkeit kostengünstiger oder bei gleichen Kosten wirksamer verhindert.

Diese Aufgabe wird durch das erfindungsgemässe Förderband gelöst, wie es im unabhängigen Patentanspruch 1 definiert ist. Bevorzugte Ausführungsvarianten ergeben sich aus den abhängigen Patentansprüchen.

Das Wesen der Erfindung besteht darin, dass bei einem Förderband mit einer Zugschicht und einer polymeren Oberflächenbeschichtung, die ein antimikrobielles Additiv enthält, die Oberflächenbeschichtung eine Basisschicht und eine funktionelle Oberflächenschicht, die das antimikrobielle Additiv enthält, umfasst, wobei die Basisschicht ein antimikrobiellen Additiv in einer Konzentration enthält, die kleiner ist als die Konzentration der antimikrobiellen Additivs in der funktionellen Oberflächenschicht.

Die Erfindung beruht auf der Erkenntnis, dass die antimikrobielle Wirksamkeit bei einem Förderband in erster Linie ein Oberflächeneffekt ist. Es ist daher nicht sinnvoll, das antimikrobielle Additiv in der gleichen Konzentration über die ganze Dicke der Oberflächenbeschichtung zu verteilen. Die Oberflächenbeschichtung wird deshalb erfindungsgemäss in eine Basisschicht und eine funktionelle Oberflächenschicht unterteilt und das antimikrobielle Additiv wird in der funktionellen Oberflächenschicht und der Basisschicht verteilt. Es kann so im Bereich der Förderfläche mit einer geringeren Menge an antimikrobiellem Additiv und somit kostengünstiger eine genauso hohe Konzentration oder mit derselben Additivmenge eine deutlich höhere Konzentration und damit eine grössere Wirksamkeit gegen Mikroorganismen erreicht werden. Im weiteren kann eine beschädigte Förderfläche beispielsweise mit einer Lösung, Dispersion oder Emulsion des antimikrobiellen Additivs leicht repariert werden.

Dadurch, dass in der Basisschicht, die den Zweck hat, der Oberflächenbeschichtung eine beispielsweise zur Dämpfung ausreichende Dicke zu verleihen, antimikrobielles Additiv nur in einer deutlich geringeren Konzentration angeordnet wird, besteht ausserdem weniger die Gefahr, dass gewisse Förderbandeigenschaften, wie z.B. Biegesteifigkeit, Flexibilität, Stabilität, Dämpfwirkung etc., negativ beeinflusst werden.

Es ist noch anzumerken, dass die funktionelle Oberflächenschicht neben der antimikrobiellen Wirkung noch andere Funktionen haben kann, beispielsweise das Mitnehmen der Fördergüter durch eine geeignete Reibfläche, UV-Beständigkeit, eine gewünschte Farbe und/oder eine antistatische, hydrolysebeständige und/oder schmutzabweisende Oberfläche, etc. Diese funktionellen Eigenschaften können allein durch die funktionelle Oberflächenschicht erreicht werden. Die darunterliegenden Schichten, insbesondere die Basisschicht, bleiben davon unbeeinflusst und können so besser auf die ihnen zukommenden Funktionen ausgerichtet werden.

Vorzugsweise ist die funktionelle Oberflächenschicht nicht dicker als die Basisschicht. Es wird so vergleichsweise wenig antimikrobielles Additiv benötigt.

Bei einer vorteilhaften Ausführungsvariante des erfindungsgemässen Förderbands ist die Zugschicht eine textile Schicht, vorzugsweise ein Gewebe. Eine textile Schicht weist im allgemeinen eine gute Zugfestigkeit und optimale Biegesteifigkeiten auf. Neben Geweben kommen beispielsweise auch Vliese, Gelege oder Gewirke in Frage.

Bei einer alternativen vorteilhaften Ausführungsvariante ist die Zugschicht eine monolithische Schicht, vorzugsweise eine Folie. Eine monolithische Schicht ist normalerweise gut mit den angrenzenden Schichten verbindbar, beispielsweise verklebbar oder verschmelzbar.

Mit Vorteil ist die Basisschicht mindestens 0,1 mm, vorzugsweise mindestens 0,3 mm, noch bevorzugter mindestens 0,5 mm, dick. Mit diesen Minimaldicken können gewünschte Dämpfwirkungen sichergestellt werden.

Vorteilhafterweise beträgt die Dicke der funktionellen Oberflächenschicht höchstens 50%, vorzugsweise höchstens 30%, noch bevorzugter höchstens 10%, der Dicke der Basisschicht. Durch eine relativ dünne Ausbildung der funktionellen Oberflächenschicht kann insbesondere Additivmaterial eingespart werden.

Bei einer vorteilhaften Ausführungsvariante ist zwischen der Basisschicht und der Zugschicht eine Haftschicht und/oder mindestens eine weitere polymere Schicht angeordnet. Diese zusätzliche Schicht bzw. zusätzlichen Schichten gewährleisten eine bessere Verbindung zwischen Basisschicht und Zugschicht und können gewisse Förderbandeigenschaften, beispielsweise die Biegesteifigkeit oder die potentielle Dämpfung, beinflussen.

Für gewisse Anwendungen ist es vorteilhaft, dass die mindestens eine weitere polymere Schicht antimikrobielle Additive in einer Konzentration enthalten, die kleiner ist als die Konzentration des antimikrobiellen Additivs in der funktionellen Oberflächenschicht. Die Wirksamkeit des Förderbands gegen Mikroorganismen kann so noch gesteigert werden.

Mit Vorteil beträgt die Konzentration des antimikrobiellen Additivs in der funktionellen Oberflächenschicht zwischen 0,1 Gew.-% und 10 Gew.-%, vorzugsweise zwischen 1 Gew.-% und 5 Gew.-%. Solche Konzentrationen sind bei den üblichen antimikrobiellen Additiven bezüglich antimikrobieller Wirksamkeit und Stabilität der funktionellen Oberflächenschicht am optimalsten.

Das antimikrobielle Additiv kann eine organische oder anorganische Substanz oder eine Kombination davon sein. Vorzugsweise ist es ein Silberzeolit, Aluminium-, Calciumoder Magnesiumoxid, Zinkpyrithion, Oxybisphenoxarsin oder eine Kombination davon. Diese Substanzen töten bekannterweise Mikroorganismen effizient ab oder hemmen zumindest deren Wachstum.

Bei einer vorteilhaften Ausführungsvariante ist sowohl die Förderseite des Förderbands als auch seine Unterseite mit einer genannten Oberflächenbeschichtung versehen. Es kann so auf beiden Förderbandseiten das Ansiedeln und Wachsen von Mikroorganismen verhindert werden.

Förderbänder können auf verschiedene Arten hergestellt werden. Es wird z.B. zunächst auf herkömmliche Weise der Kernteil produziert und danach die Oberflächenbeschichtung, beispielsweise mittels Extrusions- oder Koextrusionsbeschichtung, Folienlamination, Schmelzwalzenoder Pulverbeschichtung oder in einem Sprüh- oder Pastenstreichverfahren, erzeugt. Alternativ kann auch zunächst die Oberflächenbeschichtung auf die betreffende Trägerschicht aufgebracht werden und anschliessend können verschiedene Zwischenprodukte zum Endprodukt kaschiert werden.

Die Basisschicht besteht normalerweise aus einem thermoplastischen Kunststoff oder Elastomer, wie z.B. Polyurethan, Polyvinylchlorid, Polyester, Polyetherblockamid, einem Polyolefin, Silikon oder Gummi oder einer Mischung von thermoplastischen Kunststoffen oder Elastomeren.

Die eigentliche funktionelle Oberflächenschicht besteht im allgemeinen aus einem Trägermaterial aus thermoplastischen Kunststoffen, wie z.B. Polyurethan, Polyvinylchlorid, Polyester oder Polyolefinen, in dem das antimikrobielle Additiv angeordnet ist. Das Trägermaterial kann dem Material der Basisschicht entsprechen oder ein anderes sein. Das antimikrobielle Additiv kann beispielsweise in Form von einem Vorgemisch oder Konzentrat oder direkt als Pulver, Granulat oder Paste dem Trägermaterial beigemischt werden.

Neu und vorteilhaft gegenüber dem Stand der Technik ist insbesondere, dass die funktionelle Oberflächenschicht gemäss einer ersten Ausführungsvariante durch Streichen einer Paste oder durch Sprühen auf die Basisschicht erzeugt oder ausgebessert werden kann.

Das Aufbringen der funktionellen Oberflächenschicht mittels eines Pastenstreichoder Sprühverfahrens ermöglicht insbesondere ein Ausbessern von beschädigten Förderflächenstellen auf einfache Weise.

Im folgenden wird das erfindungsgemässe Förderband unter Bezugnahme auf die beigefügten Zeichnungen anhand von fünf Ausführungsbeispielen detaillierter beschrieben. Es zeigen:
- Fig. 1 -: eine Schnittansicht eines ersten Ausführungsbeispiels eines erfindungsgemässen Förderbands mit einer textilen Zugschicht und einer Oberflächenbeschichtung;
- Fig. 2 -: eine Schnittansicht eines zweiten Ausführungsbeispiels eines erfindungsgemässen Förderbands mit einer monolithischen Zugschicht und einer Oberflächenbeschichtung;
- Fig. 3 -: eine Schnittansicht eines dritten Ausführungsbeispiels eines erfindungsgemässen Förderbands mit einer textilen Zugschicht, einer Haftschicht und einer Oberflächenbeschichtung;
- Fig. 4 -: eine Schnittansicht eines vierten Ausführungsbeispiels eines erfindungsgemässen Förderbands mit zwei textilen Zugschichten; und
- Fig. 5 -: eine Schnittansicht eines fünften Ausführungsbeispiels eines erfindungsgemässen Förderbands mit zwei textilen Zugschichten und einer Oberflächenbeschichtung sowohl auf der Förderseite als auch auf der Unterseite des Förderbands.

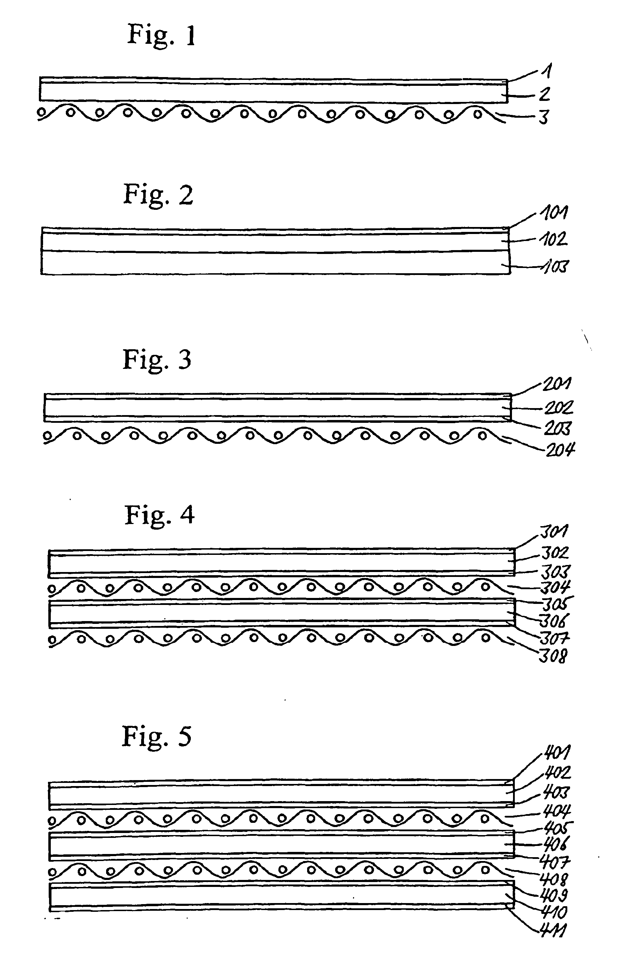

### Figur 1 - Erstes Ausführungsbeispiel

Bei diesem ersten Ausführungsbeispiel umfasst das Förderband als Zugschicht 3 ein Gewebe, das mit einer Oberflächenbeschichtung versehen ist. Die Oberflächenbeschichtung besteht aus einer Basisschicht 2, auf der eine funktionelle Oberflächenschicht 1 angeordnet ist.

Die Basisschicht 2 ist hier aus Polyurethan, könnte aber auch aus einem anderen thermoplastischen Kunststoff oder Elastomer, wie z.B. Polyvinylchlorid, Polyester, Polyetherblockamid, einem Polyolefin, Silikon oder Gummi oder einer Mischung von thermoplastischen Kunststoffen oder Elastomeren sein. Die Dicke der Basisschicht 2 beträgt ca. 0,5 mm.

Auf die Basisschicht 2 ist eine Paste mit antimikrobiellen Eigenschaften gestrichen, die die funktionelle Oberflächenschicht 1 bildet. Die Paste besteht grösstenteils aus einem aliphatischen flexiblen Polyurethan, das in Dimethylformamid gelöst ist. Sie enthält als antimikrobielles Additiv Zinkpyrithion in einer Konzentration von 2 Gew.-% in Bezug auf den Festkörpergehalt. Zur Herstellung der Paste wird Polyurethangranulat in einem Rührwerk in Dimethylformamid-Lösungsmittel gelöst. Anschliessend wird pulverförmiges Zinkpyrithion hinzugegeben und solange gemischt, bis dass Zinkpyrithion in der Paste gleichmässig verteilt ist.

Die Paste wird dann auf einer Streichmaschine mittels einer Rakel in einer bestimmten Schichtdicke, z.B. 0,2 mm, in einem oder mehreren Streichdurchgängen auf die Basisschicht 2 aufgetragen. Das gestrichene Substrat wird schliesslich in einem Trockenkanal bei einer Temperatur von 120 °C während 2 Minuten getrocknet. Die aufgetragene Schichtdicke beträgt im getrockneten Zustand 0,1 mm.

Dieselbe Paste kann auch zur Ausbesserung von beschädigten funktionellen Oberflächenschichten 1 verwendet werden.

### Figur 2 - Zweites Ausführungsbeispiel

Bei diesem zweiten Ausführungsbeispiel umfasst das Förderband als Zugschicht 103 eine monolithische Schicht, beispielsweise eine Kunststofffolie. Als Zugschicht geeignete monolithische Schichten sind dem Fachmann bekannt. Die monolithische Schicht ist mit einer Oberflächenbeschichtung versehen, die auch hier aus einer Basisschicht 102, auf der eine funktionelle Oberflächenschicht 101 angeordnet ist, besteht. Die Basisschicht 102 und die funktionelle Oberflächenschicht 101 entsprechen der Basisschicht 2 bzw. der funktionellen Oberflächenschicht 1 des ersten Ausführungsbeispiels.

### Figur 3 - Drittes Ausführungsbeispiel

Bei diesem dritten Ausführungsbeispiel umfasst das Förderband ähnlich wie beim ersten Ausführungsbeispiel eine Zugschicht 204 in Form eines Gewebes, eine Basisschicht 202 und eine funktionelle Oberflächenschicht 201, die der Zugschicht 3, der Basisschicht 2 bzw. der funktionellen Oberflächenschicht 1 im wesentlichen entsprechen. Um eine bessere Verbindung zwischen Basisschicht 202 und Zugschicht 204 zu erreichen, ist dazwischen ein eine dünne Haftschicht 203 bildender Haftvermittler angeordnet. Geeignete Haftvermittler sind dem Fachmann bekannt und im Handel erhältlich.

### Figur 4 - Viertes Ausführungsbeispiel

Bei diesem vierten Ausführungsbeispiel umfasst das Förderband zwei Zugschichten 304 und 308 in Form von Geweben, die zusammen mit einer dazwischen angeordneten polymeren Schicht 306 und Haftschichten 305 bzw. 307 zu einem Kernteil kaschiert sind. Die obere Zugschicht 304 ist mit einer Oberflächenbeschichtung versehen, die durch eine über eine Haftschicht 303 mit der Zugschicht 304 verbundene Basisschicht 302 und eine darauf angeordnete funktionelle Oberflächenschicht 301 gebildet ist. Die funktionelle Oberflächenschicht 301, die Basisschicht 302, die Haftschicht 303 und die Zugschicht 304 entsprechen im wesentlichen der funktionellen Oberflächenschicht 201, der Basisschicht 202, der Haftschicht 203 bzw. der Zugschicht 204 des dritten Ausführungsbeispiels.

### Figur 5 - Fünftes Ausführungsbeispiel

Bei diesem fünften Ausführungsbeispiel umfasst das Förderband wie beim vierten Ausführungsbeispiel zwei Zugschichten 404 und 408 in Form von Geweben, die zusammen mit einer dazwischen angeordneten polymeren Schicht 406 und Haftschichten 405 bzw. 407 zu einem Kernteil kaschiert sind. Sowohl die förderflächenseitige obere Zugschicht 404 als auch die untere Zugschicht 408 sind mit einer Oberflächenbeschichtung versehen, die jeweils durch eine über eine Haftschicht 403 bzw. 409 mit der Zugschicht 404 bzw. 408 verbundene Basisschicht 402 bzw. 410 und eine darauf angeordnete funktionelle Oberflächenschicht 401 bzw. 411 gebildet sind.

Bei aller Ausführungsbeispiele enthält die Basisschicht ebenfalls antimikrobielles Additiv, jedoch im allgemeinen in einer deutlich geringeren Konzentration.

Zu den vorbeschriebenen Förderbändern sind weitere konstruktive Variationen realisierbar. Hier ausdrücklich erwähnt seien noch:
- Zwischen der Basisschicht und der Zugschicht können weitere polymere Schichten angeordnet sein, die prinzipiell ebenfalls antimikrobielles Additiv enthalten können.
- Als antimikrobielles Additiv kann auch ein Gemisch von verschiedenen Wirkstoffen dienen.

## Patentansprüche

1. Förderband mit einer Zugschicht (3; 103; 204; 304, 308; 404, 408) und einer polymeren Oberflächenbeschichtung, die eine Basisschicht (2; 102; 202; 302; 402, 410) und eine funktionelle Oberflächenschicht (1; 101; 201; 301; 401, 411) umfasst, wobei die funktionelle Oberflächenschicht (1; 101; 201; 301; 401, 411) ein antimikrobielles Additiv enthält, **dadurch gekennzeichnet, dass** die Basisschicht (2; 102; 202; 302; 402, 410) ein antimikrobielles Additiv in einer Konzentration enthält, die kleiner ist als die Konzentration des antimikrobiellen Additivs in der funktionellen Oberflächenschicht (1; 101; 201; 301; 401, 411).

2. Förderband nach Anspruch 1, **dadurch gekennzeichnet, dass** die funktionelle Oberflächenschicht (1; 101; 201; 301; 401, 411) nicht dicker als die Basisschicht (2; 102; 202; 302; 402, 410) ist.

3. Förderband nach Anspruch 1 oder 2, **dadurch gekennzeichnet, dass** die Zugschicht (3; 204; 304, 308; 404, 408) eine textile Schicht, vorzugsweise ein Gewebe, ist.

4. Förderband nach Anspruch 1 oder 2, **dadurch gekennzeichnet, dass** die Zugschicht (103) eine monolithische Schicht, vorzugsweise eine Folie, ist.

5. Förderband nach einem der Ansprüche 1 bis 4, **dadurch gekennzeichnet, dass** die Basisschicht (2; 102; 202; 302; 402, 410) mindestens 0,1 mm dick ist.

6. Förderband nach Anspruch 5, **dadurch gekennzeichnet, dass** die Basisschicht (2; 102; 202; 302; 402, 410) mindestens 0,3 mm dick ist.

7. Förderband nach Anspruch 6, **dadurch gekennzeichnet, dass** die Basisschicht (2; 102; 202; 302; 402, 410) mindestens 0,5 mm dick ist.

8. Förderband nach einem der Ansprüche 1 bis 7, **dadurch gekennzeichnet, dass** die Dicke der funktionellen Oberflächenschicht (1; 101; 201; 301; 401, 411) höchstens 50% der Dicke der Basisschicht (2; 102; 202; 302; 402, 410) beträgt.

9. Förderband nach Anspruch 8, **dadurch gekennzeichnet, dass** die Dicke der funktionellen Oberflächenschicht (1; 101; 201; 301; 401, 411) höchstens 30% der Dicke der Basisschicht (2; 102; 202; 302; 402, 410) beträgt.

10. Förderband nach Anspruch 9, **dadurch gekennzeichnet, dass** die Dicke der funktionellen Oberflächenschicht (1; 101; 201; 301; 401, 411) höchstens 10% der Dicke der Basisschicht (2; 102; 202; 302; 402, 410) beträgt.

11. Förderband nach einem der Ansprüche 1 bis 10, **dadurch gekennzeichnet, dass** zwischen der Basisschicht (202; 302; 402, 410) und der Zugschicht (204; 304, 308; 404, 408) eine Haftschicht (203; 303; 403; 409) angeordnet ist.

12. Förderband nach einem der Ansprüche 1 bis 11, **dadurch gekennzeichnet, dass** zwischen der Basisschicht (202; 302; 402, 410) und der Zugschicht (204; 304, 308; 404, 408) mindestens eine weitere polymere Schicht angeordnet ist.

13. Förderband nach Anspruch 12, **dadurch gekennzeichnet, dass** die mindestens eine weitere polymere Schicht ein antimikrobielles Additiv in einer Konzentration enthält, die kleiner ist als die Konzentration des antimikrobiellen Additivs in der funktionellen Oberflächenschicht (1; 101; 201; 301; 401, 411).

14. Förderband nach einem der Ansprüche 1 bis 13, **dadurch gekennzeichnet, dass** die Konzentration des antimikrobiellen Additivs in der funktionellen Oberflächenschicht (1; 101; 201; 301; 401, 411) zwischen 0,1 Gew.-% und 10 Gew.-% beträgt.

15. Förderband nach Anspruch 14, **dadurch gekennzeichnet, dass** die Konzentration des antimikrobiellen Additivs in der funktionellen Oberflächenschicht (1; 101; 201; 301; 401, 411) zwischen 1 Gew.-% und 5 Gew.-% beträgt.

16. Förderband nach einem der Ansprüche 1 bis 15, **dadurch gekennzeichnet, dass** sowohl seine Förderseite als auch seine Unterseite mit einer genannten Oberflächenbeschichtung versehen ist.

## Claims

1. A conveyor belt with a traction layer (3; 103; 204; 304, 308; 404, 408) and with a polymeric surface coating which comprises a base layer (2; 102; 202; 302; 402, 410) and a functional surface layer (1; 101; 201; 301; 401, 411),
wherein the functional surface layer (1; 101; 201; 301; 401, 411) comprises an antimicrobial additive, **characterized in that** the base layer (2; 102; 202; 302; 402, 410) comprises an antimicrobial additive at a concentration which is smaller than the concentration of the antimicrobial additive in the functional surface layer (1; 101; 201; 301; 401, 411).

2. The conveyor belt as claimed in claim 1,
**characterized in that** the functional surface layer (1; 101; 201; 301; 401, 411) is not thicker than the base layer (2; 102; 202; 302; 402, 410).

3. The conveyor belt as claimed in claim 1 or 2,
**characterized in that** the traction layer (3; 204; 304, 308; 404, 408) is a textile layer, preferably a woven textile.

4. The conveyor belt as claimed in claim 1 or 2,
**characterized in that** the traction layer (103) is a monolithic layer, preferably a film.

5. The conveyor belt as claimed in any of claims 1 to 4, **characterized in that** the thickness of the base layer (2; 102; 202; 302; 402, 410) is at least 0.1 mm.

6. The conveyor belt as claimed in claim 5,
**characterized in that** the thickness of the base layer (2; 102; 202; 302; 402, 410) is at least 0.3 mm.

7. The conveyor belt as claimed in claim 6,
**characterized in that** the thickness of the base layer (2; 102; 202; 302; 402, 410) is at least 0.5 mm.

8. The conveyor belt as claimed in any of claims 1 to 7, **characterized in that** the thickness of the functional surface layer (1; 101; 201; 301; 401, 411) is at most 50% of the thickness of the base layer (2; 102; 202; 302; 402, 410).

9. The conveyor belt as claimed in claim 8,
**characterized in that** the thickness of the functional surface layer (1; 101; 201; 301; 401, 411) is at most 30% of the thickness of the base layer (2; 102; 202; 302; 402, 410).

10. The conveyor belt as claimed in claim 9,
**characterized in that** the thickness of the functional surface layer (1; 101; 201; 301; 401, 411) is at most 10% of the thickness of the base layer (2; 102; 202; 302; 402, 410).

11. The conveyor belt as claimed in any of claims 1 to 10, **characterized in that** between the base layer (202; 302; 402, 410) and the traction layer (204; 304, 308; 404, 408) a tie layer (203; 303; 403; 409) is arranged.

12. The conveyor belt as claimed in any of claims 1 to 11, **characterized in that** between the base layer (202; 302; 402, 410) and the traction layer (204; 304, 308; 404, 408) at least one other polymeric layer is arranged.

13. The conveyor belt as claimed in claim 12,
**characterized in that** the at least one other polymeric layer comprises an antimicrobial additive at a concentration which is smaller than the concentration of the antimicrobial additive in the functional surface layer (1; 101; 201; 301; 401, 411).

14. The conveyor belt as claimed in any of claims 1 to 13, **characterized in that** the concentration of the antimicrobial additive in the functional surface layer (1; 101; 201; 301; 401, 411) is from 0.1 to 10% by weight.

15. The conveyor belt as claimed in claim 14,
**characterized in that** the concentration of the antimicrobial additive in the functional surface layer (1; 101; 201; 301; 401, 411) is from 1 to 5% by weight.

16. The conveyor belt as claimed in any of claims 1 to 15, **characterized in that** both its conveying side and its underside have an abovementioned surface coating.

## Revendications

1. Bande transporteuse avec une couche de traction (3 ; 103 ; 204 ; 304 ; 308 ; 404, 408) et un revêtement de surface polymère qui comprend une couche de base (2 ; 102 ; 202 ; 302 ; 402, 410) et une couche superficielle fonctionnelle (1 ; 101 ; 201 ; 301 ; 401, 411), la couche superficielle fonctionnelle (1 ; 101 ; 201 ; 301 ; 401, 411) contenant un additif antimicrobien, **caractérisée en ce que** la couche de base (2 ; 102 ; 202 ; 302 ; 402, 410) contient un additif antimicrobien dans une concentration inférieure à la concentration de l'additif antimicrobien dans la couche superficielle fonctionnelle (1 ; 101 ; 201 ; 301 ; 401, 411).

2. Bande transporteuse selon la revendication 1, **caractérisée en ce que** la couche superficielle fonctionnelle (1 ; 101 ; 201 ; 301 ; 401, 411) n'est pas plus épaisse que la couche de base (2 ; 102 ; 202 ; 302 ; 402, 410).

3. Bande transporteuse selon les revendications 1 ou 2, **caractérisée en ce que** la couche de traction (3 ; 204 ; 304 ; 308 ; 404, 408) est une couche textile, de préférence un tissu.

4. Bande transporteuse selon les revendications 1 ou 2, **caractérisée en ce que** la couche de traction (103) est une couche monolithique, de préférence un film.

5. Bande transporteuse selon l'une des revendications 1 à 4, **caractérisée en ce que** la couche de base (2 ; 102 ; 202 ; 302 ; 402, 410) est d'une épaisseur d'au moins 0,1 mm.

6. Bande transporteuse selon la revendication 5, **caractérisée en ce que** la couche de base (2 ; 102 ; 202 ; 302 ; 402, 410) est d'une épaisseur d'au moins 0,3 mm.

7. Bande transporteuse selon la revendication 6, **caractérisée en ce que** la couche de base (2 ; 102 ; 202 ; 302 ; 402, 410) est d'une épaisseur d'au moins 0,5 mm.

8. Bande transporteuse selon l'une des revendications 1 à 7, **caractérisée en ce que** l'épaisseur de la couche superficielle fonctionnelle (1 ; 101 ; 201 ; 301 ; 401, 411) s'élève à un maximum de 50 % de l'épaisseur de la couche de base (2 ; 102 ; 202 ; 302 ; 402, 410).

9. Bande transporteuse selon la revendication 8, **caractérisée en ce que** l'épaisseur de la couche superficielle fonctionnelle (1 ; 101 ; 201 ; 301 ; 401, 411) s'élève à un maximum de 30 % de l'épaisseur de la couche de base (2 ; 102 ; 202 ; 302 ; 402, 410).

10. Bande transporteuse selon la revendication 9, **caractérisée en ce que** l'épaisseur de la couche superficielle fonctionnelle (1 ; 101 ; 201 ; 301 ; 401, 411) s'élève à un maximum de 10 % de l'épaisseur de la couche de base (2 ; 102 ; 202 ; 302 ; 402, 410).

11. Bande transporteuse selon l'une des revendications 1 à 10, **caractérisée en ce qu'**une couche d'adhérence (203 ; 303 ; 403 ; 409) est disposée entre la couche de base (202 ; 302 ; 402, 410) et la couche de traction (204 ; 304 ; 308 ; 404, 408).

12. Bande transporteuse selon l'une des revendications 1 à 11, **caractérisée en ce qu'**au moins une autre couche polymère est disposée entre la couche de base (202 ; 302 ; 402, 410) et la couche de traction (204 ; 304 ; 308 ; 404, 408).

13. Bande transporteuse selon la revendication 12, **caractérisée en ce que** la au moins une autre couche polymère contient un additif antimicrobien dans une concentration inférieure à la concentration de l'additif antimicrobien dans la couche superficielle fonctionnelle (1 ; 101 ; 201 ; 301 ; 401, 411).

14. Bande transporteuse selon l'une des revendications 1 à 13, **caractérisée en ce que** la concentration de la couche superficielle fonctionnelle (1 ; 101 ; 201 ; 301 ; 401, 411) en additif antimicrobien se situe entre 0,1 % en poids et 10 % en poids.

15. Bande transporteuse selon la revendication 14, **caractérisée en ce que** la concentration de la couche superficielle fonctionnelle (1 ; 101 ; 201 ; 301 ; 401, 411) en additif antimicrobien se situe entre 0,1 % en poids et 5 % en poids.

16. Bande transporteuse selon l'une des revendications 1 à 15, **caractérisée en ce que** la face transporteuse de la bande transporteuse et sa face envers sont toutes deux munies d'un revêtement de surface tel que mentionné.
